# FASCICULE DE BREVET EUROPEEN

(11) **EP 0 379 821 B1**
(45) Date de publication et mention de la délivrance du brevet: **10.03.1993**
(21) Numéro de dépôt: 89403640.9
(22) Date de dépôt: 22.12.1989
(51) Int. Cl.: B60P 7/04, B60J 7/12

(54) **Dispositif d'ouverture de toit pour véhicule industriel bâché**
Dachöffnungseinrichtung für ein Industriefahrzeug mit einer Wagenplane
Roof opening device for an industrial vehicle with an awning

(30) Priorité: 25.01.1989 FR 8900901
(43) Date de publication de la demande: 01.08.1990
(73) Titulaire: S.E.S.R. - SOCIETE EUROPEENNE DE SEMI-REMORQUES, F-75008 Paris (FR)
(72) Inventeur: Larchet, Pierre, F-54130 Saint Max (FR); Bourlon, Alain, F-54300 Luneville (FR)
(74) Mandataire: Rodhain, Claude

(56) Documents cités:
- CH-A- 307 156
- US-A- 3 820 840

## Description

La présente invention est relative à un dispositif d'ouverture d'un toit de véhicule industriel tel qu'un camion, un semi-remorque ou une remorque,fermé par une bâche.

On connait actuellement deux procédés pour ouvrir le toit d'un véhicule industriel dont le toit est constitué par une bâche amovible soutenue par des arceaux, savoir : soit enrouler la bâche, soit la plier.

L'enroulement de la bâche est une opération longue et difficile qui nécessite deux opérateurs, un de chaque côté du véhicule, tout d'abord pour défaire les liens qui maintiennent la bâche sur la caisse du véhicule et ensuite pour l'enrouler sur elle-même, cette dernière phase de l'opération nécessitant que les opérateurs montent sur une échelle, ou autre marchepied, déplacé le long du véhicule au fur et à mesure de la progression de l'opération.

On a donc cherché un autre système, plus pratique, qui consiste à plier la bâche.

Dans ce but on a monté les extrémités des arceaux soutenant la bâche sur des chariots roulant sur les bords supérieurs de la caisse du véhicule et permettant de déplacer les arceaux longitudinalement sur celle-ci. La bâche, fixée sur les arceaux,se replie sur elle-même en accordéon au fur et à mesure que les arceaux sont déplacés, soit vers l'avant, soit vers l'arrière du véhicule au moyen de câbles agencés pour permettre de tirer tous les arceaux les uns après les autres à partir du sol, par un seul opérateur. Le repliement de la bâche peut ainsi s'effectuer de deux façon différentes : horizontalement ou verticalement.

Le pliage horizontal est le plus simple, mais aussi celui qui fonctionne le plus mal. En effet, la bâche tend à se coincer, et effectivement se coince entre les arceaux, ce qui rend presque impossible de réaliser l'opération en une seule fois sur des véhicules de grande longueur.

Le pliage accordéon vertical est le plus efficace mais, pour le réaliser convenablement, il convient de soulever la bâche entre chaque arceau, ou encore de soulever un arceau sur deux, ce qui nécessite encore que deux opérateurs se tiennent de part et d'autre du véhicule pour contrôler l'opération et en surveiller le déroulement.

Pour remédier à cet inconvénient on a imaginé de monter les extrémités des arceaux, non seulement sur des chariots, mais également de les relier par des biellettes qui, certes améliorent le fonctionnement, mais constituent néanmoins un mécanisme compliqué, et donc coûteux. Un tel dispositif est connu par exemple de US-A- 3 820 840.

L'invention vise à remédier à ces inconvénients de la technique connue en fournissant un dispositif d'ouverture pour un véhicule industriel bâché, qui soit simple et léger et peu coûteux.

Elle a pour objet à cet effet un dispositif d'ouverture de toit pour véhicule industriel bâché, du type dans lequel la bâche est soutenue et fixée sur des arceaux montés coulissants sur les bords supérieurs de la caisse du véhicule, caractérisé en ce que chacun desdits arceaux est relié à l'arceau suivant par une bande flexible élastiquement, en une matière tendant à reprendre élastiquement sa forme initiale lorsqu'il a été fléchi, ladite bande étant contrainte de manière à présenter une forme convexe vers le haut entre les arceaux, et sa longueur entre chaque paire d'arceaux étant un peu supérieure à la distance séparant ceux-ci dans leur position espacée de soutien de la bâche fermant le véhicule.

Suivant une autre caractéristique de l'invention, ladite bande flexible élastiquement est une bande d'acier à ressorts.

Suivant une variante, ladite bande flexible élastiquement est en une matière plastique présentant des propriétés analogues à celles de l'acier à ressorts.

Suivant un mode de réalisation, ladite bande est d'une seule pièce et est disposée suivant l'axe longitudinal du véhicule.

Dans un autre mode de réalisation, il est prévu une bande, ou une série d'organes flexibles élastiquement, latéralement sur chaque côté du véhicule.

D'une façon avantageuse, ladite contrainte est appliquée à ladite bande lors de sa fabrication.

De préférence, ladite contrainte est imprimée à ladite bande par son mode de fixation sur lesdits arceaux.

La description qui va suivre, en regard des dessins annexés à titre d'exemples, permettra de bien comprendre comment l'invention peut être mise en pratique.

La figure 1 est une vue schématique en élévation latérale d'un camion recouvert par une bâche tendue sur des arceaux montés roulants sur les bords supérieurs de la caisse.

La figure 2 est une vue partielle à plus grande échelle montrant les extrémités des arceaux, leur liaison au moyen d'une bande élastique et la bâche qu'ils soutiennent, en position de couverture complète du véhicule.

La figure 3 est une vue analogue à celle de la figure 2, montrant les arceaux en position rapprochée, de repliement de la bâche.

En se référant au dessin, la bâche 1 couvrant un camion est soutenue de façon classique par des arceaux 2 montés coulissants par leurs extrémités sur les bords supérieurs des côtés 3 de sa caisse.

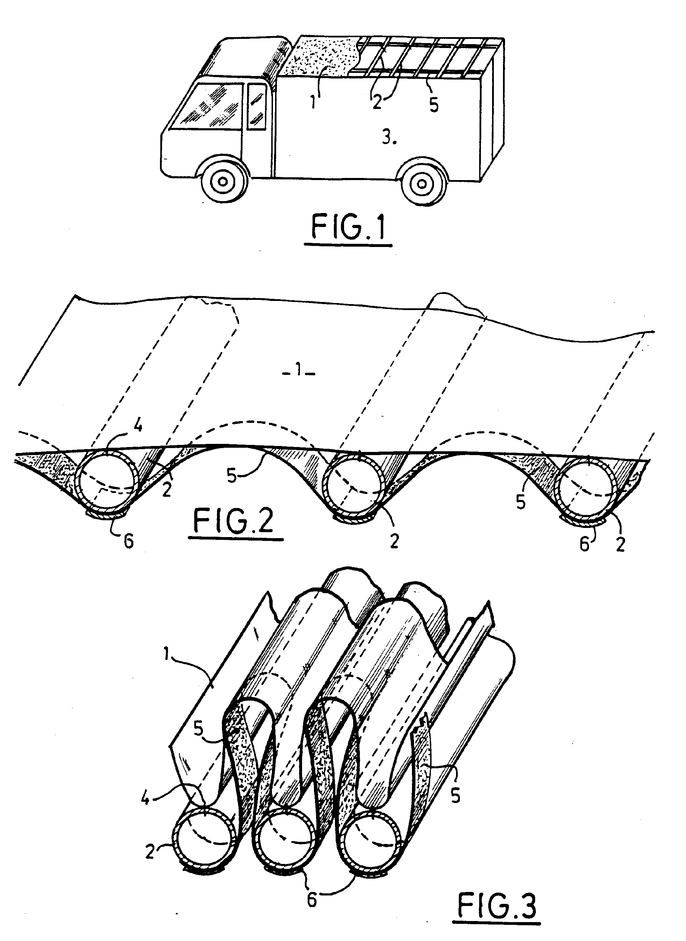

En se référant aux figures 2 et 3, la bâche 1 est fixée sur chaque arceau comme représenté en 4, au moins sur la partie supérieure de ceux-ci, de façon connue. Suivant l'invention, les arceaux sont réunis les uns aux autres, par une bande 5 en une matière élastiquement flexible, telle que par exemple en acier à ressorts, qui est disposée suivant l'axe longitudinal du véhicule.

La bande 5 est fixée sur la partie inférieure de chaque arceau et, suivant un mode de réalisation avantageux de l'invention, elle s'étend à travers une ferrure incurvée 6 formant tunnel qui lui imprime une forme incurvée convexe vers le haut, la longueur de ladite bande, entre deux arceaux successifs, étant un peu supérieure à la distance qui les sépare.

Grâce à cet agencement, lorsque le toit du véhicule est fermé,la bâche est soutenue, entre les arceaux, par la bande 5, tandis que lorsque les arceaux sont tirés les uns contre les autres, successivement, pour ouvrir le toit du véhicule, les portions de bandes entre les arceaux sont forcées de se plier vers le haut, entraînant la bâche avec elles et la contraignant à former des plis vers le haut, qui s'inclinent ensuite un peu les uns sur les autres.

On remarquera qu'il n'est pas nécessaire que la bâche 1 soit fixée sur les portions de bandes entre les arceaux.

On comprend, bien entendu, que la bande flexible élastiquement 5 peut être en une seule pièce ou en sections entre les arceaux. De même, la bande 5 (ou ses sections) peut également être réalisée en une matière plastique appropriée.

La longueur de la bande, ou la section de bande 5, entre les arceaux est calculée de façon que le sommet de la partie convexe dépasse légèrement le niveau des arceaux, dans la position de fermeture du toit.

L'effet de ressort exercé par la bande ou les sections de bande, dont la raideur ou l'élasticité peut être choisie par l'épaisseur de la matière de la bande, facilite la remise en place de la bâche pour recouvrir le véhicule, et peut même dans une certaine mesure rendre cette opération automatique.

Le dispositif suivant l'invention est léger et de réalisation simple et peu coûteuse. Son fonctionnement est sûr et il permet d'éviter une usure prématurée de la bâche.

## Revendications

1. Dispositif d'ouverture de toit pour véhicule industriel bâché, du type dans lequel la bâche est soutenue et fixée sur des arceaux montés coulissants sur les bords supérieurs de la caisse du véhicule, caractérisé en ce que chacun desdits arceaux (2) est relié à l'arceau suivant par une bande (5) flexible élastiquement, en une matière tendant à reprendre élastiquement sa forme initiale lorsqu'elle a été fléchie, ladite bande (5) étant contrainte de manière à présenter une forme convexe vers le haut entre les arceaux (2), et sa longueur entre chaque paire d'arceaux étant un peu supérieure à la distance séparant ceux-ci dans leur position espacée de soutien de la bâche (1) fermant le véhicule.

2. Dispositif suivant la revendication 1, caractérisé en ce que ladite bande (5) flexible élastiquement est une bande d'acier à ressorts.

3. Dispositif suivant la revendication 2, caractérisé en ce que ladite bande (5) flexible élastiquement est en une matière plastique présentant des propriétés analogues à celles de l'acier à ressorts.

4. Dispositif suivant l'une des revendications 2 ou 3, caractérisé en ce que ladite bande (5) est d'une seule pièce.

5. Dispositif suivant l'une quelconque des revendications 2, 3 ou 4, caractérisé en ce que ladite bande (5) est disposée suivant l'axe longitudinal du véhicule.

6. Dispositif suivant l'une quelconque des revendications précédentes, caractérisé en ce qu'il est prévu une bande (5), ou une série de sections de bandes (5), flexible élastiquement, latéralement sur chaque côté du véhicule.

7. Dispositif suivant la revendication 6, caractérisé en ce que ladite contrainte est appliquée à ladite bande ou auxdites sections de bandes (5) en cours de fabrication.

8. Dispositif suivant la revendication 6, caractérisé en ce que ladite contrainte est imprimée à ladite bande ou auxdites sections de bandes (5) par leurs organes de fixation sur lesdits arceaux (2).

## Patentansprüche

1. Vorrichtung zum Öffnen eines Planendachs eines Nutzfahrzeugs, der Art wobei die Plane auf Stützstreben gehalten und fixiert ist, welche gleitend auf den oberen Rändern des Fahrzeugkastens montiert sind, dadurch gekennzeichnet, dass jede dieser Stützstreben (2) mit der folgenden Stützstrebe mittels eines elastisch flexiblen Bandes (5) verbunden ist, welches aus einem Material besteht, das nach einer Verbiegung in seine ursprüngliche Form zurückzukommen sucht, wobei dieses Band (5) derart vorgespannt ist, dass es zwischen den Stützstreben (2) eine nach oben konvexe Form aufweist, und wobei seine Länge zwischen jedem Paar von Stützstreben etwas grösser ist als deren Distanz in ihrer gespreizten Position zum Stützen der Plane (1) bei geschlossenem Fahrzeug.

2. Vorrichtung nach Anspruch 1, dadurch gekennzeichnet, dass dieses elastisch flexible Band (5) ein Band aus Federstahl ist.

3. Vorrichtung nach Anspruch 2, dadurch gekennzeichnet, dass dieses elastisch flexible Band (5) aus einem Kunststoff mit ähnlichen Eigenschaften wie Federstahl besteht.

4. Vorrichtung nach Anspruch 2 oder 3, dadurch gekennzeichnet, dass dieses flexible Band (5) aus einem einzigen Stück besteht.

5. Vorrichtung nach irgend einem der Ansprüche 2, 3 oder 4, dadurch gekennzeichnet, dass dieses Band (5) in Richtung der Längsachse des Fahrzeugs angeordnet ist.

6. Vorrichtung nach irgend einem der vorangehenden Ansprüche, dadurch gekennzeichnet, dass ein Band (5) oder eine Folge von elastisch flexiblen Bandabschnitten seitlich auf jeder Seite des Fahrzeugs vorgesehen sind.

7. Vorrichtung nach Anspruch 6, dadurch gekennzeichnet, dass diese Vorspannung dem Band oder den Bandabschnitten (5) während der Herstellung aufgezwungen wird.

8. Vorrichtung nach Anspruch 6, dadurch gekennzeichnet, dass diese Vorspannung dem Band oder den Bandabschnitten (5) durch ihre Mittel zum Befestigen an den Stützstreben aufgezwungen ist.

## Claims

1. A device for opening a roof in an industrial vehicle covered with a tarpaulin, of a type in which said tarpaulin is held and fixed on hoops which are slidably mounted on the upper edges of the vehicle body, characterized in that each of said hoops (2) is connected to the following hoop through a resilient strap (5) made from a material which tends to return to its original shape after bending, with said strap (5) being constrained to show an upwardly convex shape between hoops (2), and with the length thereof between each pair of hoops being slightly greater than the distance between them in the spaced position thereof when maintaining said tarpaulin to close the vehicle.

2. A device as recited in claim 1, characterized in that said resilient strap (5) comprises a spring steel strap.

3. A device as recited in claim 2, characterized in that said resilient strap (5) is made from a plastic material having properties similar to spring steel ones.

4. A device as recited in either claim 2 or 3, characterized in that said strap (5) is a one-piece strap.

5. A device as recited in any claim 2, 3 or 4, characterized in that said strap (5) is arranged along the vehicle longitudinal center line.

6. A device as recited in any preceding claim, characterized in that a resilient strap (5), or a series of resilient strap (5) sections, are laterally provided on each vehicle side.

7. A device as recited in claim 6, characterized in that said restraint is applied to said strap or said strap (5) sections during the making thereof.

8. A device as recited in claim 6, characterized in that said restraint is applied to said strap or said strap (5) sections through the fixing members thereof to said hoops (2).
